# EUROPÄISCHE PATENTSCHRIFT

(11) **EP 2 050 247 B1**
(45) Veröffentlichungstag und Bekanntmachung des Hinweises auf die Patenterteilung: **29.08.2012**
(21) Anmeldenummer: 07788007.8
(22) Anmeldetag: 27.07.2007
(51) Int. Cl.: H04L 29/06, H04L 12/28, H04L 29/08, H04W 80/00

(54) **NETZWERK ZUR DRAHTLOSEN ÜBERTRAGUNG VON DATEN**
NETWORK FOR WIRELESS DATA TRANSMISSION
RÉSEAU DE TRANSMISSION SANS FIL DE DONNÉES

(30) Priorität: 09.08.2006 DE 102006037243
(43) Veröffentlichungstag der Anmeldung: 22.04.2009
(73) Patentinhaber: SIEMENS AKTIENGESELLSCHAFT, 80333 München (DE)
(72) Erfinder: BRANDSTETTER, Josef, A-1150 Wien (AT); CANBOLANT, Diyap, A-1160 Wien (AT); GROSS, Stefan, 76706 Dettenheim (DE)
(74) Vertreter: Wolff, Harry
(86) Internationale Anmeldenummer: PCT/EP2007/057793
(87) Internationale Veröffentlichungsnummer: WO 2008/017596

(56) Entgegenhaltungen:
- EP-A- 1 089 495
- US-A1- 2005 218 465
- ADAMS J T: "An Introduction to IEEE STD 802.15.4" AEROSPACE CONFERENCE, 2006 IEEE BIG SKY, MT, USA 04-11 MARCH 2006, PISCATAWAY, NJ, USA,IEEE, 4. März 2006 (2006-03-04), Seiten 1-8, XP010928613 ISBN: 0-7803-9545-X
- SETHOM ET AL: "A new solution for micro-mobility management in next generation networks" COMPUTERS & ELECTRICAL ENGINEERING, XX, XX, Bd. 32, Nr. 1-3, Januar 2006 (2006-01), Seiten 22-36, XP005433693 ISSN: 0045-7906
- PROF. DR. AXEL SIKORA: "Short Range Wireless Networking mit IEEE 802.15.4 und ZigB: Möglichkeiten und Herausforderungenee" DESIGN & ELEKTRONIK ENTWICKLERFORUM, [Online] 7. Juni 2004 (2004-06-07), Seiten 1-11, XP002469154 München Gefunden im Internet: URL:http://www.stzedn.de/uploads/media/stz _zigbee_de_entwicklerforum_040706.pdf> [gefunden am 2008-02-15] in der Anmeldung erwähnt

## Beschreibung

Die Erfindung betrifft ein Netzwerk zur drahtlosen Übertragung von Daten nach dem Oberbegriff von Anspruch 1.

Ein derartiges Netzwerk, dessen Arbeitsweise durch einen Protokollstapel nach dem OSI-Referenzmodell festgelegt ist, ist aus der EP 1 119 137 A1 bekannt.

Die Erfindung betrifft ferner ein Verfahren zur drahtlosen Übertragung von Daten in einem solchen Netzwerk.

Das OSI-Referenzmodell besteht aus 7 Protokollschichten.

Die unterste Bitübertragungsschicht (Physical Layer) stellt mechanische, elektrische und weitere funktionale Hilfsmittel zur Verfügung, um physikalische Verbindungen zu aktivieren bzw. deaktivieren, sie aufrechtzuerhalten und Bits darüber zu übertragen.

Die Aufgabe der nächst höheren Sicherungsschicht (Data Link Layer) besteht darin, eine sichere, d. h. fehlerfreie, Übertragung zu gewährleisten und den Zugriff auf das Übertragungsmedium zu regeln. Nach IEEE ist die Sicherungsschicht in zwei Teilschichten, nämlich Logical Link Control Layer und Medienzugriffsschicht (Media Access Control Layer) unterteilt, wobei letztere den konkurrierenden Zugriff von Netzwerkteilnehmern auf ein Übertragungsmedium regelt.

Zu den Aufgaben der folgenden Vermittlungsschicht (Network Layer) zählen der Aufbau und die Aktualisierung von Routingtabellen, sowie die Flusskontrolle. Auch die Netzwerkadressen gehören zu dieser Schicht. Da ein Kommunikationsnetzwerk aus mehreren Teilnetzen unterschiedlicher Technologien bestehen kann, sind in dieser Schicht auch die Umsetzungsfunktionen angesiedelt, die für eine Weiterleitung zwischen den Teilnetzen notwendig sind.

Die nächsthöhere Transportschicht (Transport Layer) bietet den darauf aufbauenden anwendungsorientierten Schichten bis hin zur obersten Anwendungsschicht (Application Layer) einen einheitlichen Zugriff, so dass diese die Eigenschaften des Kommunikationsnetzwerks nicht zu berücksichtigen brauchen.

Bei dem aus der EP 1 119 137 A1 bekannten Netzwerk ist ein erster Protokollstapel für WLAN (IEEE 802.11) und ein zweiter Protokollstapel für Bluetooth vorgesehen. Zwischen den auf die Bitübertragungsschichten folgenden Sicherungsschichten und den darauf aufbauenden weiteren Protokollschichten der beiden Protokollstapel ist eine für beide Stapel gemeinsame Interoperabilitätsschicht eingefügt, deren Aufgabe es ist, das gleichzeitige Senden und/oder Empfangen via WLAN und Bluetooth verhindern. Die Bitübertragungsschichten, Sicherungsschichten und die Interoperabilitätsschicht sind auf einer gemeinsamen Hardware in Form eines Dual-Mode-Sender/Empfängers realisiert.

Aus der EP 1 089 495 A2 ist ein Netzwerk bekannt, bei dem für unterschiedliche Netzwerkzugangstechnologien unterschiedliche Protokollstapel mit jeweils einer Bitübertragungsschicht und einer Sicherungsschicht vorgesehen sind. Eine Interoperabilitätsschicht (Netzwek-Zugangs-Arbitator) verbindet die Sicherungsschichten mit den höheren Schichten des OSI-Referenzmodells, wobei diese höheren Schichten für alle Netzwerkzugangstechnologien einheitlich sind und einen einzigen Stapel bilden.

Zur drahtlosen Übertragung von Daten in der industriellen Automatisierungstechnik, der Heim- und Gebäudeautomatisierung und in vielen anderen Anwendungen sind auf dem Standard IEEE 802.15.4 basierende Funknetzwerke wegen ihrer Einfachheit, Energieeffizienz und Kostengünstigkeit sehr attraktiv. Auf diesem Standard baut auch das ZigBee-Protokoll der ZigBee Alliance auf, einer weltweiten Vereinigung von Firmen, die zusammenarbeiten um zuverlässige, kostengünstige und kabellos vernetzte Überwachungs- und Steuerungsprodukte zu entwickeln, die auf einem internationalen und offenen Standard basieren.

Der IEEE 802.15.4/ZigBee-Standard ist in einer Vielzahl von Publikationen ausführlich beschrieben, weswegen die Details des Standards als bekannt vorausgesetzt und im Einzelnen hier nicht weiter erläutert werden. Beispielhaft sind folgende Publikationen genannt:
Michael Bürge: "Standards drahtloser Übertragung: Von Bluetooth zu IEEE 802.15.4/ZigBee", ETH Zürich - Departement Informatik, Seminar Verteilte Systeme zum Thema Smart Environments, SS 2004, am 14.07.2006 im Internet gefunden unter http://www.vs.inf.ethz.ch/edu/SS2004/DS/reports/09 zigbee rep ort.pdf,
Rudi Latuske: "ZigBee - Protokollsoftware und Entwicklungsumgebung", September 2004, am 14.07.2006 im Internet gefunden unter http://www.ars2000.com./ZigBee-White-Paper.pdf, oder
Prof. Dr. Axel Sikora: "Short-Range Wireless Networking mit IEEE 802.15.4 und ZigBee: Möglichkeiten und Herausforderungen", Design & Elektronik Entwicklerforum, München 7.6.2004, am 14.07.2006 im Internet gefunden unter http://www.stzedn.de/uploads/media/stz zigbee de entwicklerfo rum 040706.pdf.

Anlehnend an das OSI-Referenzmodell definiert der Standard IEEE 802.15.4 lediglich die Bitübertragungsschicht sowie die darüber liegende Medienzugriffsschicht. Funktionen, die die Sicherheit in der Medienzugriffsschicht betreffen, werden zwar im Standard angesprochen, jedoch in die höheren Schichten ausgelagert.

Nach Expertenmeinung kann ZigBee nicht allen Anforderungen des industriellen Umfelds gerecht werden, so dass es als sinnvoll erachtet wird, bestimmte Modifikationen am ZigBee-Protokollstapel vorzunehmen. Dies steht jedoch im Widerspruch mit der Konformität des verfügbaren bzw. verabschiedeten ZigBee-Protokollstapels.

Der Erfindung liegt daher die Aufgabe zugrunde, neben bestehenden Standards, z. B.. dem IEEE 802.15.4/ZigBee-Standard anwendungsspezifische Änderungen bei der Datenübertragung zu ermöglichen, ohne auf den betreffenden Standard verzichten zu müssen oder diesen zu verletzen.

Gemäß der Erfindung wird die Aufgabe durch das in Anspruch 1 angegebene Netzwerk gelöst.

In dem Protokollstapel ist zwischen der auf die Bitübertragungsschicht folgenden Sicherungsschicht und den darauf aufbauenden weiteren Protokollschichten eine Interoperabilitätsschicht eingefügt ist, auf der die weiteren Protokollschichten in parallelen individuellen Stapeln aufbaubar sind. Die Interoperbilitätsschicht ermöglicht es, jeweils einen individuellen Stapel der höheren Schichten mit einem Stapel der niedrigeren Schichten logisch zu verbinden.

Interoperabilitätsschichten sind zwischen verschiedenen Anwendungen (Applications) und einer gemeinsamen Kommunikationsinfrastruktur allgemein bekannt, nicht aber in der erfindungsgemäßen Struktur.

Die Bitübertragungsschicht (Physical Layer) und Sicherungsschicht (Data Link Layer) des Protokollstapels können z. B. durch den Standard IEEE 802.15.4, durch einen um spezielle Funktionen für industrielle Anforderungen erweiterten IEEE 802.15.4-Standard oder durch einen alternativen Standard definiert sein. Die individuellen Stapel bauen dann auf der Medienzugriffsschicht (Media Access Control Layer) auf. Als individuelle Stapel kommen auch andere Protokolle, wie z. B. Dust (Dust Networks), Millenial (Millenial Net) oder Zensys in Frage.

Das Einfügen der zusätzlichen Interoperabilitätsschicht schafft eine terminierte Schnittstelle mit dezidierten Zugangspunkten zu den darunterliegenden Protokollschichten und ermöglicht es so, beispielsweise gleichzeitig oder wahlweise verschiedene Kommunikationsprotokolle in den darüberliegenden Protokollschichten zu verwenden. Die Interoperabilitätsschicht leitet die Anforderungen, etwa eine Anforderung zum Versenden eines Datenpaketes, und Zugriffe der höheren Schichten um, vorverarbeitet diese in ein plattformunabhängiges Format und führt sie den darunterliegenden Schichten zu. Diese sind auf einer eigenen Hardware realisiert, so dass die Interoperabilitätsschicht auf verschiedene Hardware-Subsysteme verteilt ist.

Als Teil der Interoperabilitätsschicht ist eine Transportschicht (Transport Layer) definiert, welche es ermöglicht, eine Medienzugriffsschicht (Media Access Control Layer) an eine Host-Vermittlungsschicht (Network Layer) anzubinden. Die Transportschicht stellt dabei Mechanismen zur Verfügung um diese Anbindung über eine MAC-Hardware-Schnittstelle hinweg zu ermöglichen. Insbesondere ist es Aufgabe der Transportschicht, Dienstprimitive einer höheren Schicht an die zugeordnete Medienzugriffschicht weiterzuleiten. Im Weiteren können in der Transportschicht allgemeine Mechanismen vorgesehen werden, welche z. B. eine dynamische Konfiguration eines oder mehrerer Protokollstapel ermöglichen. Beispiele hiefür sind:
- Ein Suchmechanismus, welcher es einer Management-Anwendung ermöglicht, herauszufinden, welche Varianten der Medienzugriffsschicht verfügbar sind. Entsprechend dieser Information kann dann eine bestimmte höhere Schicht einer bestimmten unteren Schicht zugeordnet werden. Diese Zuordnung kann jederzeit geändert werden.
- Ein Flusssteuerungsmechanismus, welcher es erlaubt die verfügbare Bandbreite der Hardware-Schnittstelle auf parallel laufende Protokollstapel determiniert zu verteilen.

Die Transportschicht (Transport Layer) erlaubt es dadurch der Vermittlungsschicht (Network Layer) von der darunterliegenden MAC-Hardware (baustein- bzw. chipspezifisch), den MAC-Hardware-Schnittstellen (z.B. UART, SPI, USB) sowie dem verwendeten physikalischen Layer (Funktechnik, Frequenz, Modulationsverfahren) unabhängig zu sein. Dementsprechend können MAC-Subsysteme unabhängig von der Vermittlungsschicht (Network Layer) realisiert werden.

Durch die eingeführte Transportschicht (Transport Layer) wird die mehr oder weniger monolithische Architektur der jeweiligen Protokollstapel, wie es bei den heute verfügbaren bzw. vermarkteten Protokollen, z. B. ZigBee, der Fall ist, verlassen bzw. umgangen und stattdessen eine alternative oder gar parallele Betriebsweise unterschiedlichster Protokollstapel auf ein und der selben Zielhardware ermöglicht.

Zur weiteren Erläuterung der Erfindung wird im Folgenden auf die Figuren der Zeichnung Bezug genommen; im Einzelnen zeigen:
Figur 1 ein Beispiel für das erfindungsgemäße Netzwerk und
Figur 2 den Protokollstapel des Netzwerks.

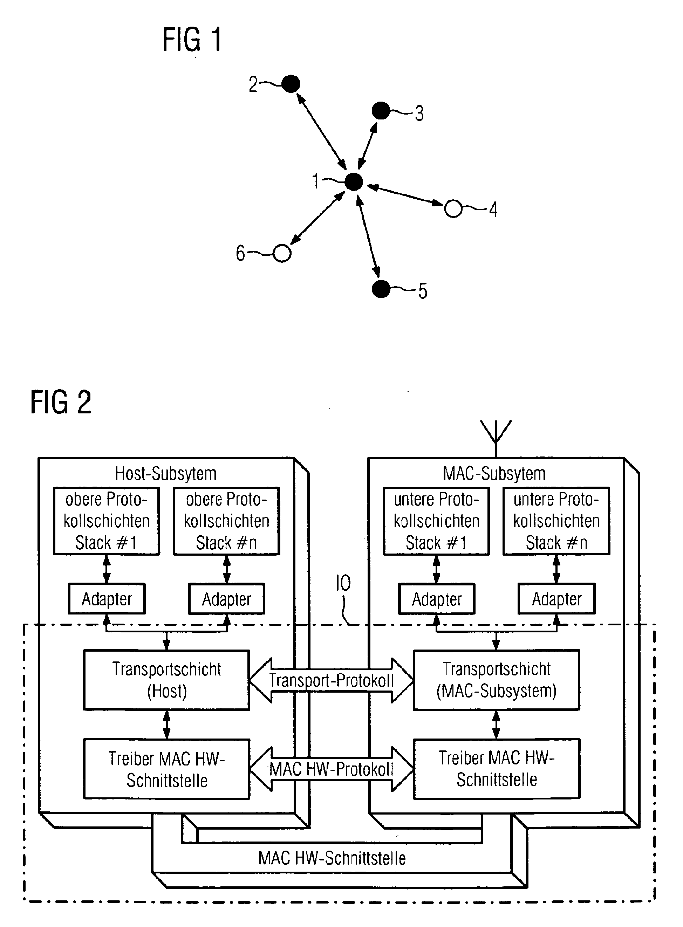

Figur 1 zeigt beispielhaft für das erfindungsgemäße Netzwerk ein ZigBee-Netzwerk, dessen Topologie als Sternnetz, aber auch als Baum- oder Maschennetz aufgebaut sein kann. Die einzelnen Netzwerkknoten 1 bis 6 bestehen dabei aus Geräten 1, 2, 3, 5 mit voller Funktionalität (Full-Function-Devices = FFDs) und Geräten 4, 6 mit reduzierter Funktionalität (Reduced-Function-Devices = RFDs). Dabei nehmen die Geräte 1 bis 6 jeweils eine der folgenden Rollen ein: Netzwerkkoordinator, Alternativ-Koordinator, Router oder Endgerät. Jede Rolle kann auch die Aufgaben der jeweils untergeordneten Rolle enthalten. Ein RFD benötigt immer ein FFD als Kommunikationspartner und kann daher immer nur die Rolle eines Endgerätes übernehmen. In jedem Netzwerk gibt es genau einen Koordinator 1 und keinen, einen oder mehrere Alternativ-Koordinatoren, die im Falle eines Ausfalles des Koordinators dessen Aufgabe übernehmen. Die FFDs und RFDs unterscheiden sich auch darin, wie sie in den verschiedenen Netzwerk-Topologien eingesetzt werden können. In einem Maschennetz können nur FFDs eingesetzt werden. RFDs nehmen, wie bereits erwähnt, immer Endposition in der Netzwerk-Topologie ein. RFDs sind in der Regel für eine spezielle Aufgabe konzipiert und können somit kostengünstiger und energiesparender als FFDs sein. Bei der Anmeldung eines der hier auch als Netzwerkteilnehmer bezeichneten Geräte 2 bis 6 im Netzwerk wird ihm von dem Netzwerkkoordinator 1 ein Identifier zugewiesen, über den der Netzwerkteilnehmer dann angesprochen wird.

Wie Figur 2 in schematischer Darstellung zeigt, besteht der Protokollstapel für IEEE 802.15.4/ZigBee aus folgenden Einheiten:

Die unteren Schichten des Protökollstapels bestehend aus der Bitübertragungsschicht (Physical Layer - PHY Layer) und der Medienzugriffsschicht (Medium Access Control Layer - MAC Layer) sind in einem eigenen Hardware-Subsystem (MAC-Subsystem) untergebracht. Die Vermittlungsschicht (Network-Layer) und alle darüber liegenden Schichten sind in einem weiteren Hardware-Subsystem (Host-Subsystem) realisiert.

Zwischen den unteren Protokollschichten in dem MAC-Subsystem und den oberen Protokollschichten in dem Host-Subsystem ist eine Interoperabilitätsschicht (Interoperability Layer) IO eingefügt. Als Teil der Interoperabilitätsschicht IO verbindet eine Transportschicht (Transport Layer) die beiden Hardware-Subsysteme logisch miteinander und ist dabei auf die beiden Hardware-Subsysteme verteilt. Für die Transportschicht ist ein Transport-Protokoll definiert, welches neben dem Transport von Dienstprimitiven (Service Primitive) auch die Abhandlung allgemeiner Mechanismen, wie z. B. Flusssteuerung, festlegt. Die Transportschicht baut ihrerseits wieder auf einer MAC-Hardware-Schnittstelle auf, wobei auch für die MAC-Hardware im Allgemeinen ein Protokoll definiert ist (MAC-HW-Protokoll).

Auf der Host-Subsystem-Seite liegen über der Transportschicht (Transport Layer) die höheren Schichten Stack #1, Stack #n verschiedener Protokollstapel, z. B. ZigBee, DUST usw., wobei über Adapter die spezifische Implementierung der jeweiligen Dienstschnittstellen an eine einheitliche Dienstschnittstelle der Transportschicht angepasst ist.

Auf der MAC-Subsystem-Seite liegen unter (in der Darstellung über) der Transportschicht die unteren Schichten, z. B. nach IEEE 102.15.4, der verschiedenen Protokollstapel.

## Patentansprüche

1. Netzwerk zur drahtlosen Übertragung von Daten, dessen Arbeitsweise durch einen Protokollstapel nach dem OSI-Referenzmodell festgelegt ist welches derart ausgestaltet ist, dass in dem Protokollstapel zwischen der auf die Bitübertragungsschicht folgenden Sicherungsschicht und den darauf aufbauenden weiteren Protokollschichten eine Interoperabilitätsschicht (IO) eingefügt ist, **dadurch gekennzeichnet**, auf der Interoperabilitätsschicht die weiteren Protokollschichten in parallelen individuellen Stapeln aufbaubar sind, dass die Bitübertragungsschicht und Sicherungsschicht einerseits und die darauf aufbauenden weiteren Protokollschichten andererseits auf unterschiedlichen Hardware-Systemen realisiert sind, wobei die Interoperabilitätsschicht (IO) auf beide Hardware-Systeme verteilt ist und beide Hardware-Systeme durch eine standardisierte Hardware-Schnittstelle miteinander verbunden sind, und dass die Interoperabilitätsschicht (IO) eine auf die Hardware-Systeme verteilte Transportschicht aufweist, die jeweils über Schnittstellen-Treiber mit der Hardware-Schnittstelle verbunden ist.

2. Netzwerk nach Anspruch 1, **dadurch gekennzeichnet, dass** die Bitübertragungsschicht und Sicherungsschicht des Protokollstapels durch den Standard IEEE 802.15.4 und einer der individuellen Stapel durch den ZigBee-Standard definiert sind.

3. Verfahren zur drahtlosen Übertragung von Daten in einem Netzwerk nach einem der Ansprüche 1 oder 2.

## Claims

1. Network for wireless data transmission, its mode of operation being determined by a protocol stack according to the OSI reference model, which is embodied in such a manner that an interoperability layer (IO) is inserted into the protocol stack between the security layer following the bit transmission layer and the other protocol layers based thereon, **characterised in that** the other protocol layers can be based in parallel individual stacks on the interoperability layer, the bit transmission layer and security layer on the one hand and the other protocol layers based thereon on the other hand are realized on different hardware systems, the interoperability layer (IO) being distributed to both hardware systems and both hardware systems being connected to one other by a standardised hardware interface and the interoperability layer (IO) has a transport layer distributed to the hardware systems, the transport layer being connected in each instance to the hardware interface by way of interface drivers.

2. Network according to claim 1, **characterised in that** the bit transmission layer and security layer of the protocol stack are defined by the IEEE 802.15.4 standard and one of the individual stacks by the ZigBee standard.

3. Method for wireless data transmission in a network according to one of claims 1 or 2.

## Revendications

1. Réseau de transmission sans fil de données, dont le mode de travail est fixé par une pile de protocole suivant le modèle de référence OSI, qui est tel qu'il est inséré dans la pile de protocole, entre la couche de sécurité suivant la couche de transmission de bit et les autres couches de protocole formées dessus, une couche ( I0 ) d'interopérabilité, **caractérisé en ce que** sur la couche d'interopérabilité les autres couches de protocole peuvent être formées en des piles individuelles parallèles, **en ce que** la couche de transmission de bit et la couche de sécurité sont réalisées, d'une part, et les autres couches de protocole formées dessus, d'autre part, sur des systèmes matériels différents ( IO ), la couche d'interopérabilité étant répartie sur les deux systèmes matériels et les deux systèmes matériels étant reliés entre eux par une interface matérielle normalisée, et **en ce que** la couche ( IO ) d'interopérabilité a une couche de transport, qui est répartie sur les systèmes matériels et qui est reliée respectivement à l'interface matérielle par une commande d'interface.

2. Réseau suivant la revendication 1, **caractérisé en ce que** la couche de transmission de bit et la couche de sécurité de la pile de protocole sont définies par la norme IEEE 802.15.4 et l'une des piles individuelles par la norme ZigBee.

3. Procédé de transmission sans fil de données dans un réseau suivant l'une des revendications 1 ou 2.
